# EUROPEAN PATENT APPLICATION

(11) **EP 2 903 309 A1**
(43) Date of publication of application: **05.08.2015**
(21) Application number: 14305121.7
(22) Date of filing: 30.01.2014
(51) Int. Cl.: H04W 4/06

(54) **Multi-Media Broadcast/Multi-Media Services**

(71) Applicant: ALCATEL LUCENT, 92100 Boulogne-Billancourt (FR)
(72) Inventor: Worrall, Chandrika, Swindon, Wiltshire SN5 7DJ (GB); Palat, Sudeep, Swindon, Wiltshire SN5 7DJ (GB)
(74) Representative: Leppard, Andrew John

(57) **Abstract**

A wireless telecommunications base station method, a wireless telecommunications base station, a wireless telecommunications network node method, a wireless telecommunications network node, a wireless telecommunications network user equipment method, wireless telecommunications network user equipment and computer program products are disclosed. The wireless telecommunications network base station method, comprises: transmitting a message to user equipment within a cell provided by the base station, the message encoding an indication of MBMS services provided by each neighbouring cell. In this way, whilst the user equipment still remains within the current cell, it is provided with information about the MBMS services provided by each neighbouring cell. This enables the user equipment to make a determination of whether the MBMS service will be available after it moves and, take the appropriate action to ensure appropriate service continuity.

## Description

### FIELD OF THE INVENTION

The present invention relates to a wireless telecommunications base station method, a wireless telecommunications base station, a wireless telecommunications network node method, a wireless telecommunications network node, a wireless telecommunications network user equipment method, wireless telecommunications network user equipment and computer program products.

### BACKGROUND

Wireless telecommunications networks are known. In a cellular system, radio coverage is provided by areas known as cells. A base station is located in each cell to provide the radio coverage. Traditional base stations provide coverage in relatively large geographical areas and the cells are often referred to as macro cells. It is possible to provide smaller sized cells with within a wireless telecommunications network. Such smaller sized cells are sometimes referred to as small cells, microcells, picocells femtocells. One way to establish a small cell is to provide a small cell base station that provides coverage having a relatively limited range compared to that of a macro cell. The transmission power of a small cell base station is relatively low and, hence, each small cell provides a small coverage area and covers, for example, an office or a home. Small cells may be provided within a macro cell or outside of the coverage area of any macro cells.

Information and data transmitted by the base station to the user equipment occurs on channels of radio carriers known as downlink carriers. Information and data transmitted by user equipment to the base station occurs on uplink data channels of radio carriers known as uplink carriers.

Services such as, for example, multi-media broadcast/ multi-media services (MBMS) may be provided to user equipment. In particular, user equipment which are capable of receiving services may indicate those services which may be of interest to the user equipment. The user equipment will then attempt to receive the services of interest on carriers which are indicated as carrying those services of interest.

Although techniques exist for providing MBMS to user equipment, unexpected consequences can occur.

Accordingly, it is desired to provide improved techniques for providing MBMS to user equipment.

### SUMMARY

According to a first aspect, there is provided a wireless telecommunications network base station method, comprising: transmitting a message to user equipment within a cell provided by the base station, the message encoding an indication of MBMS services provided by each neighbouring cell.

The first aspect recognizes that MBMS is seen as suitable for supporting group communication from a radio resource efficiency perspective. This is because group communication requires the transmission of the same information to a large number of receiving group members. Such group communication is particularly suited to public safety uses (i.e. uses by the emergency services or other government departments) and service continuity is particularly important in such public safety situations since the loss of service can have potentially disastrous consequences. However, the first aspect also recognizes that service continuity is not a high priority in existing MBMS implementations. In particular, should user equipment move from one cell to another, that neighbouring cell may not provide a service to which the user equipment is subscribed to. The fact that the neighbouring cell does not provide that service would take the user equipment some time to discover after which, the user equipment would need to request the service over unicast in the new cell. If the user equipment moves out of a Multicast-broadcast single-frequency network (MBSFN), the service request over unicast is left to the user equipment. This may result in data interruption which provides for poor service continuity and may lead to an unacceptable loss of service. Accordingly, embodiments provide for improved service continuity for group communication when the user equipment moves in and out of the MBSFN area, where the services provided over MBMS.

Accordingly, a method for a wireless telecommunications network base station may be provided. The method may comprise the step of transmitting a message to user equipment within the cell provided by a base station. The message may encode an indication of the MBMS services provided by each neighbouring cell. In this way, whilst the user equipment still remains within the current cell, it is provided with information about MBMS services provided by each neighbouring cell. This enables the user equipment to make a determination of whether the MBMS service will be available after it moves and, take the appropriate action to ensure appropriate service continuity.

In one embodiment, the information provided may not necessarily indicate all the MBMS services provided by the neighbouring cells. In particular, in embodiments, all MBMS services of the neighbouring cells are not necessarily encoded in the message but only some of them. For example, where MBMS services are offered in the neighbouring cell which are not offered in the current cell, in embodiments, these MBMS services are not indicated in said message (e.g. should the current cell offer MBMS services A, B, C; and a neighbouring cell offers MBMS services A, B, C, D, E, then the message should only encode an indication of services A, B, C). Hence, in one embodiment the information only indicates whether the MBMS services provided in the current cell are also provided over MBMS in the neighbouring cells. There may be additional MBMS services provided in the neighbouring cell than those provided in the current cell. In one embodiment, information on those services not provided on the current cell are not signalled to the user equipment.

In one embodiment, the message encodes, for each neighbouring cell, an indication of MBMS services shared by the cell and that neighbouring cell. Hence, the message indicates all the services which are also available in the neighbouring cell from which the user equipment can derive the services which will not be available.

In one embodiment, the message encodes, for each neighbouring cell, an indication of MBSFN areas shared by the cell and that neighbouring cell. Accordingly, each MBSFN area shared may be indicated in the message from which the MBMS services available and possibly not available may be derived.

In one embodiment, the indication of MBSFN areas comprises an area bit field which indicates whether an MBSFN area provided by the cell is also provided by that neighbouring cell.

In one embodiment, the area bit field is ordered to indicate MBSFN areas provided by the cell in an order indicated by a MBMS point-to-multipoint Control Channel of the cell. By arranging the bit field in the same order as indicated in the MBMS point-to-multipoint control channel, the MBSFN areas may be derived without being explicitly identified, which reduces signalling load.

In one embodiment, the message encodes, for each neighbouring cell, an indication of a subset of MBSFN areas shared by the cell and that neighbouring cell.

In one embodiment, the indication of a subset of MBSFN areas comprises a subset bit field which indicates whether an MBMS service of an MBSFN area provided by the cell is also provided that neighbouring cell. Accordingly, the MBMS services of an MBSFN carrier which are provided by the neighbouring cell may be indicated.

In one embodiment, the subset bit field is ordered to indicate MBMS services of the MBSFN area provided by the cell in an order indicated by a MBMS point-to-multipoint Control Channel of the cell. Again, ordering the MBMS services in the order indicated by the MBMS point-to-point multipoint control channel avoids the need to explicitly indicate the MBMS services and reduces the signalling load.

In one embodiment, the indication of a subset of MBSFN areas is provided for each MBSFN area indicated as not being provided by that neighbouring cell.

In one embodiment, the method comprises, receiving, from a network node, information providing the indication of MBMS services provided by each neighbouring cell to be encoded in the message.

In one embodiment, the message is encoded within a system information block.

According to a second aspect, there is provided a wireless telecommunications network base station, comprising: transmission logic operable to transmit a message to user equipment within a cell provided by the base station, the message encoding an indication of MBMS services provided by each neighbouring cell.

In one embodiment, the message encodes, for each neighbouring cell, an indication of MBMS services shared by the cell and that neighbouring cell.

In one embodiment, the message encodes, for each neighbouring cell, an indication of MBSFN areas shared by the cell and that neighbouring cell.

In one embodiment, the indication of MBSFN areas comprises an area bit field which indicates whether an MBSFN area provided by the cell is also provided by that neighbouring cell.

In one embodiment, the area bit field is ordered to indicate MBSFN areas provided by the cell in an order indicated by a MBMS point-to-multipoint Control Channel of the cell.

In one embodiment, the message encodes, for each neighbouring cell, an indication of a subset of MBSFN areas shared by the cell and that neighbouring cell.

In one embodiment, the indication of a subset of MBSFN areas comprises a subset bit field which indicates whether an MBMS service of an MBSFN area provided by the cell is also provided that neighbouring cell.

In one embodiment, the subset bit field is ordered to indicate MBMS services of the MBSFN area provided by the cell in an order indicated by a MBMS point-to-multipoint Control Channel of the cell.

In one embodiment, the indication of a subset of MBSFN areas is provided for each MBSFN area indicated as not being provided by that neighbouring cell.

In one embodiment, the base station comprises reception logic operable to receive, from a network node, information providing the indication of MBMS services provided by each neighbouring cell to be encoded in the message.

In one embodiment, the message is encoded within a system information block.

According to a third aspect, there is provided a wireless telecommunications network node method, comprising: transmitting information to a base station providing a cell, the information encoding an indication of MBMS services provided by each neighbouring cell.

In one embodiment, the information encodes, for each neighbouring cell, an indication of MBMS services shared by the cell and that neighbouring cell.

In one embodiment, the information encodes, for each neighbouring cell, an indication of MBSFN areas shared by the cell and that neighbouring cell.

In one embodiment, the indication of MBSFN areas comprises an area bit field which indicates whether an MBSFN area provided by the cell is also provided by that neighbouring cell.

In one embodiment, the area bit field is ordered to indicate MBSFN areas provided by the cell in an order indicated by a MBMS point-to-multipoint Control Channel of the cell.

In one embodiment, the information encodes, for each neighbouring cell, an indication of a subset of MBSFN areas shared by the cell and that neighbouring cell.

In one embodiment, the indication of a subset of MBSFN areas comprises a subset bit field which indicates whether an MBMS service of an MBSFN area provided by the cell is also provided that neighbouring cell.

In one embodiment, the subset bit field is ordered to indicate MBMS services of the MBSFN area provided by the cell in an order indicated by a MBMS point-to-multipoint Control Channel of the cell.

In one embodiment, the indication of a subset of MBSFN areas is provided for each MBSFN area indicated as not being provided by that neighbouring cell.

According to a fourth aspect, there is provided a wireless telecommunications network node, comprising: transmission logic operable to transmit information to a base station providing a cell, the information encoding an indication of MBMS services provided by each neighbouring cell.

In one embodiment, the information encodes, for each neighbouring cell, an indication of MBMS services shared by the cell and that neighbouring cell.

In one embodiment, the information encodes, for each neighbouring cell, an indication of MBSFN areas shared by the cell and that neighbouring cell.

In one embodiment, the indication of MBSFN areas comprises an area bit field which indicates whether an MBSFN area provided by the cell is also provided by that neighbouring cell.

In one embodiment, the area bit field is ordered to indicate MBSFN areas provided by the cell in an order indicated by a MBMS point-to-multipoint Control Channel of the cell.

In one embodiment, the information encodes, for each neighbouring cell, an indication of a subset of MBSFN areas shared by the cell and that neighbouring cell.

In one embodiment, the indication of a subset of MBSFN areas comprises a subset bit field which indicates whether an MBMS service of an MBSFN area provided by the cell is also provided that neighbouring cell.

In one embodiment, the subset bit field is ordered to indicate MBMS services of the MBSFN area provided by the cell in an order indicated by a MBMS point-to-multipoint Control Channel of the cell.

In one embodiment, the indication of a subset of MBSFN areas is provided for each MBSFN area indicated as not being provided by that neighbouring cell.

According to a fifth aspect, there is provided a wireless telecommunication network user equipment method, comprising: receiving a message provided by the base station, the message encoding an indication of MBMS services provided by each neighbouring cell; and determining from the message whether a neighbouring cell to which the user equipment is to move provides an MBMS service required by the user equipment and, if not, requesting the MBMS service over a unicast bearer.

In one embodiment, the step of determining comprises requesting the MBMS service over a unicast bearer prior to moving to the neighbouring cell.

In one embodiment, the step of determining comprises requesting the MBMS service over a unicast bearer on moving to the neighbouring cell.

According to a sixth aspect, there is provided a wireless telecommunication network user equipment, comprising: reception logic operable to receive a message provided by the base station, the message encoding an indication of MBMS services provided by each neighbouring cell; and determining logic operable to determine from the message whether a neighbouring cell to which the user equipment is to move provides an MBMS service required by the user equipment and, if not, to request the MBMS service over a unicast bearer.

In one embodiment, the determining logic is operable to request the MBMS service over a unicast bearer prior to moving to the neighbouring cell.

In one embodiment, the determining logic is operable to request the MBMS service over a unicast bearer on moving to the neighbouring cell.

According to a seventh aspect, there is provided a computer program product operable, when executed on a computer, to perform the method steps of the first, the third or the fifth aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates main components of a wireless telecommunications network providing MBMS;
Figure 2 illustrates schematically E-MBMS control plane architecture in more detail; and
Figure 3 shows a typical deployment scenario where one or more services are provided within a Multicast-broadcast single-frequency network (MBSFN) area.

### DESCRIPTION OF THE EMBODIMENTS

### Overview

Before discussing the embodiments in any more detail, first an overview will be provided. Embodiments provide a technique where information is provided within one cell detailing which group communication services, such as MBMS services, are provided by neighbouring cells. This enables user equipment which are subscribed to such MBMS services to determine whether or not the MBMS service it requires will be available should it handover or relocate to a neighbouring cell. Based on this information, the user equipment can request a unicast bearer for the service if it is moving to a neighbouring cell where the service is not provided over MBMS by that neighbouring cell. This enables the determination of whether an MBMS service is available or not be made much more quickly and even enables a unicast service to be set up in advance of any movement to another cell, thereby significantly improving service continuity.

One embodiment utilizes a bit map to indicate the available services in the neighbouring cell or cells. Embodiments also utilise delta signalling where the information indicates whether the services provided in the current cell are also provided in the neighbouring cell or cells. In order to minimize the signalling load, the information is formatted in such a way that if the neighbouring cell belongs to the same MBSFN area as the current cell, service level information is not provided.

In one embodiment, the information is signalled to the user equipment using radio resource connection (RRC) broadcast signalling, either within the existing system information blocks (for example, SIB 15) or a new system information block. The Multi-cell/multicast Coordination Entity (MCE) provides the information regarding the services available in the neighbouring cells to the base station using network signalling. The services indicated in the signalling may be limited to those services used for group communication.

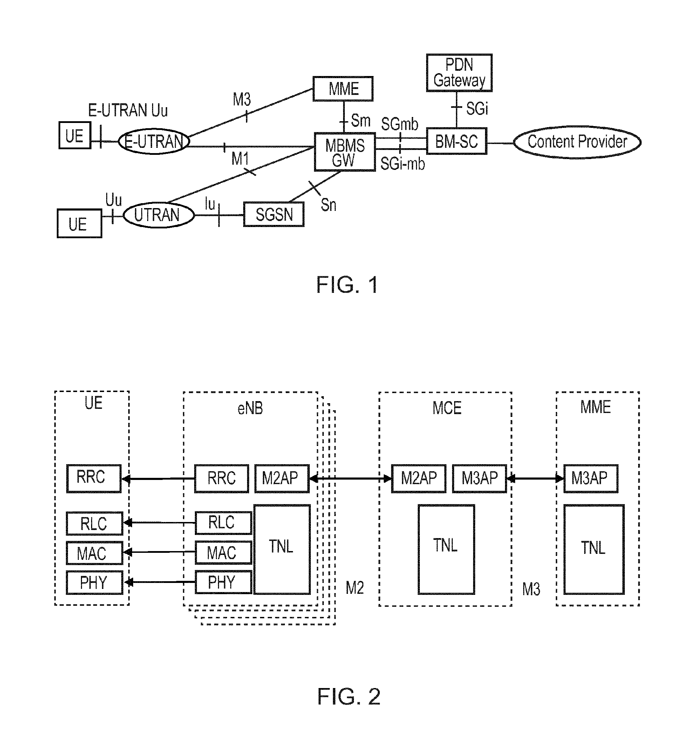

By way of background, Figure 1 illustrates schematically reference architecture for an evolved packet system with the Evolved Universal Terrestrial Radio Access Network (E-UTRAN). As can be seen from Figure 1, a content provider provides a broadcast multimedia service centre (BM-SC) with service data to be transmitted to members or subscribers of a user group. The BM-SC typically performs encryption of the content to be routed to group users. The BM-SC provides an MBMS gateway with control and traffic signalling and the MBMS gateway is operable to provide traffic and control signalling to the E-UTRAN and mobility management entity (MME) respectively. When performing MBMS communication, the E-UTRAN includes a multi cast entity (MCE) coordinator.

Figure 2 illustrates schematically the E-MBMS control plane architecture in more detail.

### Example Deployment

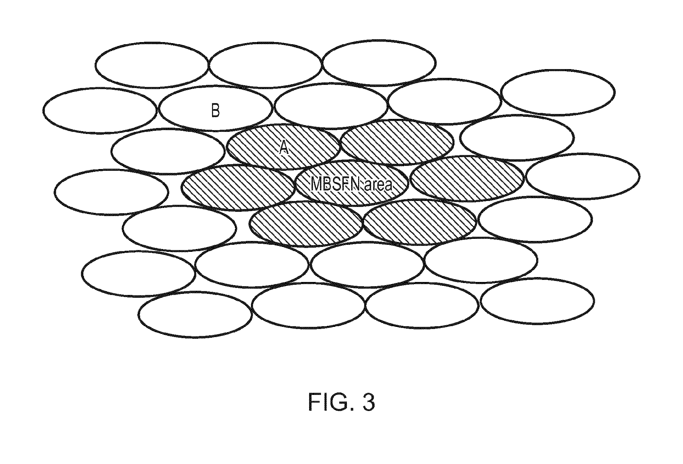

Figure 3 shows a typical deployment scenario where one or more services are provided within a Multicast-broadcast single-frequency network (MBSFN) area. The highlighted cells form an MBSFN area. Outside of the MBSFN area, the services are provided on request from the user equipment from a unicast bearer. Inside of the MBSFN area, the services are provided over MBMS.

In this example, it is assumed that user equipment is receiving a service over MBMS in cell A. The user equipment is moving from cell A to cell B. If the user equipment is in RRC_idle, then the user equipment performs a cell reselection procedure to find the best cell to move to. If the user equipment is in RRC_connected, then the user equipment performs a handover procedure. In both circumstances, the cell that the user equipment is moving to is known by the user equipment prior to moving to that cell, in this example cell B.

If the user equipment has information that the service it currently receives over MBMS is not available over MBMS in cell B, then the user equipment is able to request the service over unicast either prior to, or on moving to, cell B. Therefore, service interruption is avoided during cell change.

In order to achieve this, the current cell needs to provide information on which services are provided in cell B over MBMS. Within existing networks, a cell can belong to up to 8 MBSFN areas. If the neighbouring cell (for example, cell B) belongs to the same MBSFN areas or a subset of MBSFN areas as the current cell, the services on the corresponding MBSFN areas are continued over MBMS in the neighbouring cells. Also, even if the neighbouring cell and the current cell do not belong to the same MBSFN area, then services which are provided over MBMS in the current cell may still be provided in the neighbouring cells, but in a different MBSFN area. Alternatively, the services can be provided over a unicast bearer.

Hence, information is required which indicates whether the neighbouring cells share the same MBSFN area (and therefore already provide all the MBMS services for that area) or whether an MBMS service within an MBSFN area which is not shared by a neighbouring cell is nevertheless provided by another MBMS area provided by that neighbouring cell (therefore the required service is still being provided over MBMS, albeit within a different MBSFN area). If the service is not within an MBSFN area shared by the cells or within another MBSFN area of the neighbouring cell, then a unicast server may be is established to provide that service to the user equipment when it moves to the neighbouring cell.

### Information structure

In order to optimize and minimize the amount of signalling required, the information provided by a cell regarding services provided by neighbouring cells is encoded in one embodiment as follows.

A cell identifier identifies the neighbouring cell to which the information relates.

Thereafter, an MBSFN area field in the form of a bit map having a length of 8 bits is used to indicate whether the neighbouring cell and the current cell belong to the same MBSFN areas. The order of the bit map represents the order of the MBSFN areas signalled by the current cell MCCH. A 1 indicates that the current cell and the neighbouring cell belong to the same MBSFN area. A 0 indicates that the current cell and the neighbouring cells do not belong to the same MBSFN area. For example, if the current cell belongs to 8 MBSFN areas, MBSFN_{A-H}, and a neighbouring cell also belongs to MBSFN_{A-H}, then every bit in the bitmap will be set to 1 (i.e. 11111111) to indicate that the two cells share identical MBSFN areas. In this case, no further information needs to be provided to the user equipment relating to that neighbouring cell's MBMS services. This is because every MBMS service currently provided to the user equipment in the current cell will also be provided to the user equipment in the neighbouring cell.

However, a neighbouring cell may not belong to every MBSFN areas. For example, a neighbouring cell may not belong to MBSFN areas MBSFN_{D-F}. Accordingly, the MBSFN area field will encode a bit map of 11100011 to indicate that the neighbouring cell belongs to MBSFN areas MBSFN_{A-C}, does not belong to MBSFN areas MBSFN_{D-F}, but does belong to MBSFN areas MBSFN_{G-H}. Once again, it is not necessary to identify the MBSFN areas explicitly since this may be derived from the current cell MCCH. From this field, it can be identified that the neighbouring cell and the current cell belong to five of the current cell's MBSFN areas, but do not belong to three of those MBSFN areas.

For the MBSFN areas to which the neighbouring cell does not belong, an MBMS service field is provided as a second bitmap which indicates which services of those three MBSFN areas are nevertheless provided over MBMS in the neighbouring cell. One MBMS service field is provided for each of the three MBSFN areas, and are provided in the order that those MBSFN areas are indicated in the corresponding MCCH of the current cell.

The second bitmap is of variable length, where the length depends on the number of services provided in each MBSFN area, as indicated in the bearer configuration signalled in the corresponding MCCH of the current cell. The length of the bitmap can also be signalled together with the bitmap to assist the user equipment in decoding the information.

Once again, the services are listed in the second bitmap in the same order as provided in the MCCH. A value of 1 indicates that the service is provided over MBMS in the neighbouring cell, whilst a value of 0 indicates that the service is not provided over MBMS in the neighbouring cell.

For example, should MBSFN area MBSFN_{D} have four MBMS services, MBMS_{A-D}, then the MBMS field will have a length of four bits. Should MBMS_{A}, MBMS_{B} and MBMS_{D} be provided in the neighbouring cell, but MBMS_{C} is not, then the bitmap will have the value 1101. For the avoidance of doubt, it will be appreciated that although MBMS_{A}, MBMS_{B} and MBMS_{D} are provided in the neighbouring cell, these will not be provided in MBSFN_{D} since this MBSFN area is not provided by that neighbouring cell, but will be provided as a service within one of the other MBSFN areas provided by the neighbouring cell. The user equipment can use MBMS signalling to determine which of those other MBSFN areas carry that service.

If the service is not provided over MBMS in the neighbouring cell, then the user equipment may establish a unicast bearer for the service prior to moving to the neighbouring cell (this unicast bearer will also be relocated or handed over when the user equipment moves). Alternatively, the user equipment may establish the unicast bearer on moving to the neighbouring cell.

If the services provided over MBMS in the neighbouring cell are in the same MBSFN area (i.e. the MBSFN area field for that MBSFN area is set to 1), then the user equipment continues to receive the service over the corresponding MCCH.

If the service is provided over MBMS in the neighbouring cell but in a different MBSFN area (i.e. the first bitmap for the MBSFN area is set to 0 and the second bitmap for the MBMS service is set to 1), then the user equipment is requested to read the MCCH of the neighbouring cell for MBMS bearer configuration in the neighbouring cell in order to locate the required MBMS service.

The first and second bit maps for each neighbouring cells are provided in the current cell using the existing or an additional SIB. The MCE provides the information to the base station where the SIB is then formatted for transmission over the radio interface to the user equipment.

SIB update procedures can follow a similar procedure to legacy system information updates. On the other hand, group communication support user equipment are required to read the SIB carrying neighbouring cell information at least once in the SIB modification period. Furthermore, special handling of the SIB carrying the neighbouring cell information change notification can also be considered.

Further signalling optimisation can be obtained by limiting the neighbouring cell service information only to the services of group communication. Group communication information (which services belong to group communication) should be known by the MCE for this optimization. The BM-SC can inform the MCE of the set of TMGI's which are used for the group communication. It should be noted that the adding or removing of MBMS services is indicated over MCCH. The MCCH has a modification periodicity of 5.12s to 10.24 seconds according to existing is specifications. Therefore, the neighbouring cell service information updates are anticipated to be in the same order as the MCCH modification.

This arrangement provides a method and procedure to enable service continuity when the user equipment is moving in and out of MBSFN areas where the service is provided over MBMS, whereas when outside of the MBSFN area, the service is provided over unicast. This arrangement enables the neighbouring cell information to be provided to user equipment in the current cell and thus the user equipment is aware of the service availability in the neighbouring cell prior to the user equipment moving to that neighbouring cell. Therefore, a unicast bearer can be requested whilst the user equipment is receiving the service over MBMS, hence mitigating any possible service interruption.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wireless telecommunications network base station method, comprising:
transmitting a message to user equipment within a cell provided by said base station, said message encoding an indication of MBMS services provided by each neighbouring cell.

2. The method of claim 1, wherein said message encodes, for each neighbouring cell, an indication of MBMS services shared by said cell and that neighbouring cell.

3. The method of claim 1 or 2, wherein said message encodes, for each neighbouring cell, an indication of MBSFN areas shared by said cell and that neighbouring cell.

4. The method of claim 3, wherein said indication of MBSFN areas comprises an area bit field which indicates whether an MBSFN area provided by said cell is also provided by that neighbouring cell.

5. The method of claim 4, wherein said area bit field is ordered to indicate MBSFN areas provided by said cell in an order indicated by a MBMS point-to-multipoint Control Channel of said cell.

6. The method of any preceding claim, wherein said message encodes, for each neighbouring cell, an indication of a subset of MBSFN areas shared by said cell and that neighbouring cell.

7. The method of claim 6, wherein said indication of a subset of MBSFN areas comprises a subset bit field which indicates whether an MBMS service of an MBSFN area provided by said cell is also provided that neighbouring cell.

8. The method of claim 6 or 7, wherein said indication of a subset of MBSFN areas is provided for each MBSFN area indicated as not being provided by that neighbouring cell.

9. The method of any preceding claim, comprising, receiving, from a network node, information providing said indication of MBMS services provided by each neighbouring cell to be encoded in said message.

10. A wireless telecommunications network base station, comprising:
transmission logic operable to transmit a message to user equipment within a cell provided by said base station, said message encoding an indication of MBMS services provided by each neighbouring cell.

11. A wireless telecommunications network node method, comprising:
transmitting information to a base station providing a cell, said information encoding an indication of MBMS services provided by each neighbouring cell.

12. A wireless telecommunications network node, comprising:
transmission logic operable to transmit information to a base station providing a cell, said information encoding an indication of MBMS services provided by each neighbouring cell.

13. A wireless telecommunication network user equipment method, comprising:
receiving a message provided by said base station, said message encoding an indication of MBMS services provided by each neighbouring cell;
determining from said message whether a neighbouring cell to which said user equipment is to move provides an MBMS service required by said user equipment and, if not, requesting said MBMS service over a unicast bearer.

14. A wireless telecommunication network user equipment, comprising:
reception logic operable to receive a message provided by said base station, said message encoding an indication of MBMS services provided by each neighbouring cell;
determining logic operable to determine from said message whether a neighbouring cell to which said user equipment is to move provides an MBMS service required by said user equipment and, if not, to request said MBMS service over a unicast bearer.

15. A computer program product operable, when executed on a computer, to perform the method steps of any one of claims 1 to 9, 11 or 13.

## Amended claims

### Amended claims in accordance with Rule 137(2) EPC.

1. A wireless telecommunications network base station method, comprising:
transmitting a message to user equipment (UE) within a cell provided by said base station (eNB), said message encoding an indication of MBMS services provided by each neighbouring cell, wherein said message encodes, for seach neighbouring cell, an indication of MBMS services shared by said cell and that neighbouring cell.

2. The method of claim 1, wherein said message encodes, for each neighbouring cell, an indication of MBSFN areas shared by said cell and that neighbouring cell.

3. The method of claim 2, wherein said indication of MBSFN areas comprises an area bit field which indicates whether an MBSFN area provided by said cell is also provided by that neighbouring cell,

4. The method of claim 3, wherein said area bit field is ordered to indicate MBSFN areas provided by said cell in an order indicated by a MBMS point-to-multipoint Control Channel of said cell.

5. The method of any preceding claim, wherein said message encodes, for each neighbouring cell, an indication of a subset of MBSFN areas shared by said cell and that neighbouring cell.

6. The method of claim 5, wherein said indication of a subset of MBSFN areas comprises a subset bit field which indicates whether an MBMS service of an MBSFN area provided by said cell is also provided that neighbouring cell.

7. The method of claim 5 or 6, wherein said indication of a subset of MBSFN areas is provided for each MBSFN area indicated as not being provided by that neighbouring cell.

8. The method of any preceding claim, comprising, receiving, from a network node, information providing said indication of MBMS services provided by each neighbouring cell to be encoded in said message.

9. A wireless telecommunications network base station (eNB), comprising:
transmission logic operable to transmit a message to user equipment (UE) within a cell provided by said base station, said message encoding an indication of MBMS services provided by each neighbouring cell, wherein said message encodes, for each neighbouring cell, an indication of MBMS services shared by said cell and that neighbouring cell.

10. A wireless telecommunications network node method, comprising:
transmitting information to a base station (eNB) providing a cell, said information encoding an indication of MBMS services provided by each neighbouring cell, wherein said message encodes, for each neighbouring cell, an indication of MBMS services shared by said cell and that neighbouring cell.

11. A wireless telecommunications network node (MCE), comprising:
transmission logic operable to transmit information to a base station (eNB) providing a cell, said information encoding an indication of MBMS services provided by each neighbouring cell, wherein said message encodes, for each neighbouring cell, an indication of MBMS services shared by said cell and that neighbouring cell.

12. A wireless telecommunication network user equipment method, comprising:
receiving a message provided by a base station (eNB), said message encoding an indication of MBMS services provided by each neighbouring cell, wherein said message encodes, for each neighbouring cell, an indication of MBMS services shared by said cell and that neighbouring cell;
determining from said message whether a neighbouring cell to which said user equipment is to move provides an MBMS service required by said user equipment and, if not, requesting said MBMS service over a unicast bearer.

13. A wireless telecommunication network user equipment (UE), comprising:
reception logic operable to receive a message provided by a base station (end), said message encoding an indication of MBMS services provided by each neighbouring cell, wherein said message encodes, for each neighbouring cell, an indication of MBMS services shared by said cell and that neighbouring cell;
determining logic operable to determine from said message whether a neighbouring cell to which said user equipment is to move provides an MBMS service required by said user equipment and, if not, to request said MBMS service over a unicast bearer.

14. A computer program product operable, when executed on a computer, to perform the method steps of any one of claims 1 to 8, 10 or 12.
